# EUROPÄISCHE PATENTANMELDUNG

(11) **EP 1 557 306 A2**
(43) Veröffentlichungstag der Anmeldung: **27.07.2005**
(21) Anmeldenummer: 05000482.9
(22) Anmeldetag: 12.01.2005
(51) Int. Cl.: B60H 1/00, B60H 1/32

(54) **Klimagerät zur Standklimatisierung eines Fahrzeugs**

(30) Priorität: 16.01.2004 DE 102004002445
(71) Anmelder: Webasto AG, 82131 Stockdorf (DE)
(72) Erfinder: Krämer, Wolfgang, 81479 München (DE); Khelifa, Noureddine, Dr., 80637 München (DE); Horn, Oliver, 81475 München (DE)

(57) **Zusammenfassung**

Die Erfindung betrifft ein Klimagerät zur Standklimatisierung eines Fahrzeugs mit einem Wärmepumpenkreislauf (2) mit einem ersten Wärmeübertrager (3) zur Aufnahme von Umgebungswärme und einem zweiten Wärmeübertrager (4; 4a, 4b) zur Abgabe von Wärme in einen Fahrzeuginnenraum sowie einem elektrisch oder mechanisch antreibbaren Kompressor (5), der in Strömungsrichtung des Wärmepumpenkreislaufs (2) zwischen dem ersten und dem zweiten Wärmeübertrager (3, 4; 4a, 4b) angeordnet ist und einem Zusatzaggregat (6, 7) zur Erzeugung elektrischer oder mechanischer Leistung, wobei die elektrische oder mechanische Leistung zumindest teilweise zum Antrieb des Kompressors (5) eingesetzt wird. Zusätzlich ist ein dritter Wärmeübertrager (8) vorgesehen, durch den Abwärme des Zusatzaggregats (6, 7) auf den Wärmepumpenkreislauf (2) übertragen wird. Dadurch ist im Standbetrieb ein guter Wirkungsgrad des Klimageräts im Heizbetrieb sichergestellt.

## Beschreibung

Die Erfindung betrifft ein Klimagerät zur Standklimatisierung eines Fahrzeugs. Die Möglichkeit, ein Fahrzeug im Stand zu klimatisieren, insbesondere zu heizen, wird immer wichtiger. Neben Campingfahrzeugen ist es insbesondere im Nutzfahrzeugbereich wichtig, eine Fahrzeugkabine über einen längeren Zeitraum heizen zu können, da die Fahrzeugkabine von den Fahrern auch als Schlafplatz genutzt wird.

Das Heizen eines Fahrzeuginnenraums erfolgt häufig dadurch, daß die Abwärme eines Antriebsmotors des Fahrzeugs für die Heizung des Innenraums genutzt wird. Darüber hinaus ist es bekannt, brennstoffbetriebene Zusatzheizgeräte zu verwenden. Diese werden entweder in den Kühlkreislauf des Antriebsmotors integriert und verwenden dadurch die normalerweise im Fahrbetrieb genutzten Komponenten des Klimageräts zur Umsetzung der Standheizfunktion, oder es werden separate Heizanlagen aufgebaut, die nur für den Standbetrieb konzipiert sind.

Diese Realisierungen einer Standklimatisierung weisen eine unterschiedliche Wirtschaftlichkeit auf. Im ungünstigsten Fall läuft der Antriebsmotor im Leerlauf, um die Standheizung zu realisieren. Ein solcher Motor ist für die Funktion als Wärmelieferant völlig überdimensioniert und schon von daher wenig effizient. Hinzu kommt, daß eine große Masse mit erwärmt wird, was zusätzlich die Effizienz verringert. Brennstoffbetriebene Zusatzheizgeräte besitzen eine wesentlich bessere Effizienz. Allerdings produzieren die brennstoffbetriebenen Heizgeräte Emissionen, was in vielen Fällen nicht erwünscht ist.

Aufgabe der Erfindung ist es, ein Klimagerät zur Standklimatisierung anzugeben, das eine bessere Effizienz besitzt.

Diese Aufgabe wird durch ein Klimagerät zur Standklimatisierung eines Fahrzeugs gelöst mit einem Wärmepumpenkreislauf mit einem ersten Wärmeübertrager zur Aufnahme von Umgebungswärme und einem zweiten Wärmeübertrager zur Abgabe von Wärme in einen Fahrzeuginnenraum sowie einem elektrisch oder mechanisch antreibbaren Kompressor, der in Strömungsrichtung des Wärmepumpenkreislaufs zwischen dem ersten und dem zweiten Wärmeübertrager angeordnet ist, und einem Zusatzaggregat zur Erzeugung elektrischer oder mechanischer Leistung, wobei die elektrische oder mechanische Leistung zumindest teilweise zum Antrieb des Kompressors eingesetzt wird, und wobei ein dritter Wärmeübertrager vorgesehen ist, durch den Abwärme des Zusatzaggregats auf den Wärmepumpenkreislauf übertragen wird.

Der Vorteil der Erfindung besteht darin, daß durch die Realisierung des Klimageräts mit einem Wärmepumpenkreislauf die Effizienz weiter erhöht wird, da Umgebungswärme zusätzlich zur Heizung des Fahrzeuginnenraums eingesetzt werden kann. Zusätzlich wird Abwärme eines Zusatzaggregats in den Wärmepumpenkreislauf eingebracht. Dieser dazu verwendete Wärmeübertrager ist vorzugsweise zwischen dem ersten Wärmeübertrager und dem Kompressor angeordnet. Grundsätzlich ist ein Wärmepumpenkreislauf zwar auch ohne diese zusätzliche Wärmeeinbringung betreibbar, wenn jedoch CO₂ als Kältemittel eingesetzt wird, reicht die durch die Aufnahme von Umgebungswärme erzeugte Temperaturdifferenz nicht aus, um den Wärmepumpenkreislauf effizient zu betreiben. Hier schafft der zusätzliche Wärmeübertrager Abhilfe, indem durch die zusätzliche Wärmeeinbringung die Effizienz gesteigert wird. Selbstverständlich ist das erfindungsgemäße Klimagerät auch mit R134a als Kältemittel betreibbar.

In einer vorteilhaften Weiterbildung der Erfindung wird die Abwärme des Zusatzaggregats darüber hinaus genutzt, um einen Luftstrom durch den zweiten Wärmeübertrager weiter zu erwärmen. Darüber hinaus ist vorteilhaft, eine von dem Zusatzaggregat erzeugte elektrische Leistung ebenfalls zur Wärmeerzeugung einzusetzen, indem ebenfalls in den Luftstrom durch den zweiten Wärmeübertrager ein elektrisches Heizelement, ein sogenannter PTC, aufgenommen wird.

Es ist von Vorteil, als Zusatzaggregat eine Brennstoffzellenanordnung einzusetzen, da diese sowohl Abwärme als auch elektrische Leistung bereitstellt. Die elektrische Leistung kann zum Antrieb des Kompressors, wie oben genannt für ein elektrisches Heizelement und auch zur weiteren Versorgung des Fahrzeugs mit elektrischer Leistung eingesetzt werden.

In einer besonders günstigen Ausgestaltung ist das Klimagerät so eingerichtet, daß bestimmte Komponenten des Klimageräts sowohl wie beschrieben für einen Heizbetrieb als auch für einen Kühlbetrieb, also eine zweite Betriebsart, genutzt werden können. Beispielhaft sei ein Kompressor genannt, dessen doppelte Nutzung aus Kostengründen einen besonderen Vorteil auch im Hinblick auf die Gesamtkosten des Klimageräts darstellt.

Weitere vorteilhafte Ausgestaltungen der Erfindung sind in den Unteransprüchen angegeben.

Die Erfindung wird nachfolgend anhand von Ausführungsbeispielen näher erläutert. Es zeigt:
Figur 1 ein erstes Ausführungsbeispiel eines erfindungsgemäßen Klimageräts,
Figur 2 ein Klimagerät nach Figur 1 mit zwei Wärmeübertragern für einen Front- und einen Heckbereich,
Figur 3 eine Weiterbildung des Klimageräts von Figur 1 mit einem zusätzlichen Wärmeübertrager,
Figur 4 eine Weiterbildung des Klimageräts von Figur 3 mit einem zusätzlichen elektrischen Heizelement,
Figur 5 eine Abwandlung des Ausführungsbeispiels von Figur 4 mit einer Kombination aus Zusatzverbrennungsmotor und Generator als Zusatzaggregat,
Figur 6 ein CO₂-Klimagerät mit Heiz- und Kühlfunktion in einer Darstellung im Heizbetrieb,
Figur 7 das Klimagerät von Figur 6 in einer Darstellung im Kühlbetrieb,
Figur 8 eine Abwandlung des Klimageräts von Figur 6 und Figur 7 in einer Darstellung im Heizbetrieb und
Figur 9 das Klimagerät von Figur 8 in einer Darstellung im Kühlbetrieb.

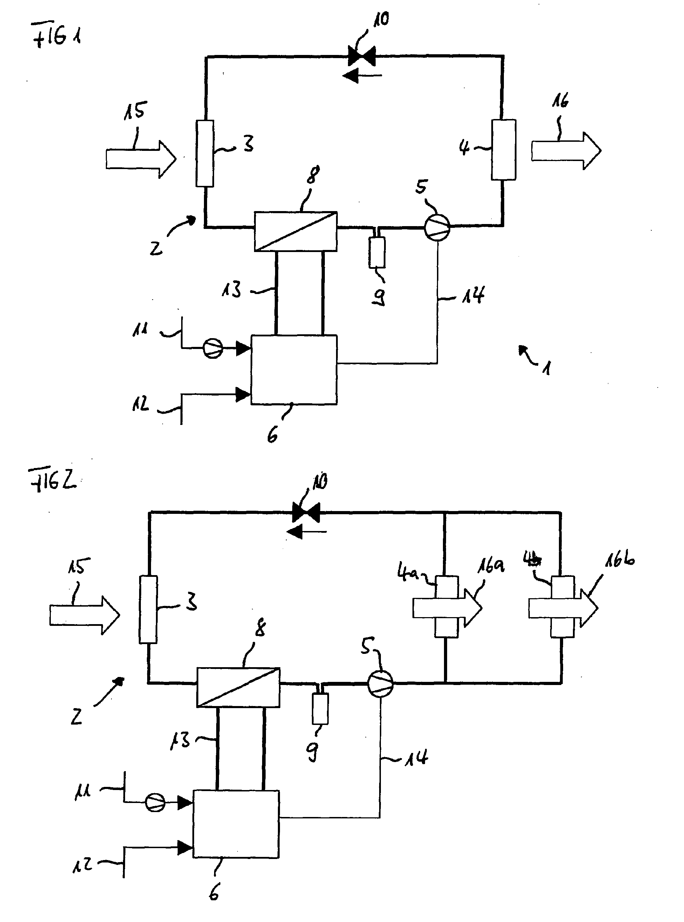

Die Figur 1 zeigt ein erstes Ausführungsbeispiel eines erfindungsgemäßen Klimageräts. Das Klimagerät 1 besitzt einen Wärmepumpenkreislauf 2. In diesem ist ein erster Wärmeübertrager 3, ein zweiter Wärmeübertrager 4, ein dritter Wärmeübertrager 8, ein Kompressor 5, ein Sammler 9 und ein Expansionsventil 10 vorgesehen. In dem Wärmepumpenkreislauf 2 wird CO₂ als Kältemittel eingesetzt. Über den Wärmeübertrager 3 wird einem Luftstrom 15 aus der Umgebung Wärme entzogen und in den Wärmepumpenkreislauf 2 eingebracht. Der Kompressor 5 verdichtet das Kühlmittel und führt es dem zweiten Wärmeübertrager 4 zu. Ein Luftstrom 16 durch den Wärmeübertrager 4 nimmt Wärme aus dem Wärmepumpenkreislauf 2 auf und wird vorzugsweise in den Innenraum eines Fahrzeugs geleitet, um diesen zu heizen. Über ein Expansionsventil 10 wird das Kältemittel sodann wieder zum ersten Wärmeübertrager 3 geführt, so daß der Wärmepumpenkreislauf geschlossen ist.

Vorteilhaft an einem Wärmepumpenkreislauf ist, daß mehr Wärmeenergie der Umgebung entzogen und in den Fahrzeuginnenraum gebracht werden kann, als elektrische oder mechanische Energie zum Antrieb des Kompressors 5 eingesetzt werden muß.

Problematisch ist bei einem solchen Wärmepumpenkreislauf 2, daß je nach Außentemperatur ein effizienter Betrieb des Wärmepumpenkreislaufs 2 nicht möglich ist. Über den Wärmeübertrager 8 wird zusätzlich Wärme von einem Zusatzaggregat 6 in den Wärmepumpenkreislauf 2 eingebracht, wodurch der Wärmepumpenkreislauf 2 in einen effizienten Betriebsbereich gebracht wird.

In dem in Figur 1 gezeigten Ausführungsbeispiel wird als Zusatzaggregat eine Brennstoffzellenanordnung 6 vorgesehen. Diese ist mit einer Luftzuführleitung 11 und einer Kraftstoffzuführleitung 12 verbunden. Der interne Aufbau der Brennstoffzellenanordnung ist für die vorliegende Erfindung von untergeordneter Bedeutung. Insbesondere beim Betrieb in Fahrzeugen mit einem Verbrennungsantriebsmotor ist es von Vorteil, als Brennstoffzelle eine SOFC (Solid Oxid Fuel Cell) zu verwenden, der ein Reformer vorgeschaltet ist, der aus Benzin oder Diesel in einer katalythische Reaktion ein wasserstoffhaltiges Gas erzeugt, das wiederum als Brenngas für die SOFC dient.

Die in der Brennstoffzellenanordnung 6 erzeugte Wärme wird über einen Kühlkreislauf 13 abgeführt und dem dritten Wärmeübertrager 8 zugeführt. Darüber hinaus liefert die Brennstoffzellenanordnung 6 elektrische Leistung, die über eine Leitung 14 dem elektrisch betriebenen Kompressor 5 zugeführt wird, um diesen mit der erforderlichen elektrischen Leistung zu versorgen.

Der Vorteil des erfindungsgemäßen Klimageräts mit einem Wärmepumpenkreislauf 2 tritt hauptsächlich dann hervor, wenn das Klimagerät 1 im Standbetrieb eingesetzt wird. Im Fahrbetrieb ist in der Regel genügend Wärmeleistung verfügbar, so daß ein effizientes Klimagerät zu Heizzwecken nicht erforderlich ist. Im Standbetrieb ist es jedoch von Vorteil, jede mögliche Wärmeenergiequelle zu nutzen. Der erste Wärmeübertrager 3 zur Aufnahme von Umgebungswärme leistet deswegen einen wichtigen Beitrag dazu, dem Klimagerät 1 im Standbetrieb eine effiziente Betriebsweise zu ermöglichen. Durch die Kombination des ersten Wärmeübertragers 3 mit dem dritten Wärmeübertrager 8 gelingt es, trotz geringer aus der Umgebung aufgenommener Wärmemengen, den Wärmepumpenkreislauf 2 effizient zu betreiben.

Das Klimagerät gemäß der Figur 2 ist derart ausgebildet, daß ein Frontbereich und ein Heckbereich des Fahrzeuginnenraums separat beheizt werden kann. Statt des zweiten Wärmeübertragers 4 in Figur 1 sind in Figur 2 zwei Wärmeübertrager 4a und 4b vorgesehen, wobei ein Luftstrom 16a durch den Wärmeübertrager 4a den Frontbereich und ein Luftstrom 16b durch den Wärmeübertrager 4b den Heckbereich des Fahrzeug heizen kann.

Bei dem in der Figur 3 dargestellten Ausführungsbeispiel eines erfindungsgemäßen Klimageräts wird die Abwärme der Brennstoffzellenanordnung 6 zusätzlich zu Heizzwecken genutzt, indem ein Kühlkreislauf 18 vorgesehen ist, der die Brennstoffzellenanordnung 6 kühlt und die Wärme auf einen zusätzlichen Wärmeübertrager 17 führt, der ebenfalls im Luftstrom 16 durch den zweiten Wärmeübertrager 4 liegt. Die durch den zweiten Wärmeübertrager 4 vorgewärmte Luft wird somit durch den zusätzlichen Wärmeübertrager 17 weiter erwärmt. Der Kreislauf 18 kann natürlich mit dem Kreislauf 13, der die Brennstoffzellenanordnung 6 mit dem dritten Wärmeübertrager 8 verbindet, gekoppelt sein, beispielsweise indem der dritte Wärmeübertrager 8 und der zusätzliche Wärmeübertrager 17 in Serie geschaltet sind. Günstiger ist es aber, die Wärmeübertrager 8 und 17 parallel zu schalten und eine Einstellmöglichkeit vorzusehen, um die Abwärme der Brennstoffzellenanordnung 6 in jeder Betriebssituation möglichst günstig auf die beiden Wärmeübertrager 8 und 17 zu verteilen.

Bei der Ausgestaltung eines Klimageräts gemäß Figur 4 wird zusätzlich die von der Brennstoffzellenanordnung erzeugte elektrische Leistung zur Erwärmung des Luftstroms 16 genutzt. Dazu ist ein elektrisches Heizelement, ein sogenannter PTC vorgesehen, das von der Brennstoffzellenanordnung 6 gespeist wird.

Die von der Brennstoffzellenanordnung 6 erzeugte thermische und elektrische Leistung wird somit vierfach genutzt. Die thermische Leistung wird auf die Wärmeübertrager 8 und 17 geführt, während die elektrische Leistung dem Kompressor 5 und dem PTC 18 zugeführt wird. Durch eine geschickte betriebssituationsabhängige Konfigurierung des Klimageräts können diese Leistungsverbraucher so betrieben werden, daß die von der Brennstoffzellenanordnung 6 erzeugte Leistung vollständig und in optimaler Weise zur Heizung eines Fahrzeuginnenraums eingesetzt wird. Ein zur Steuerung des Klimageräts erforderliches Steuergerät ist in den Figuren nicht dargestellt, aber selbstverständlich vorhanden.

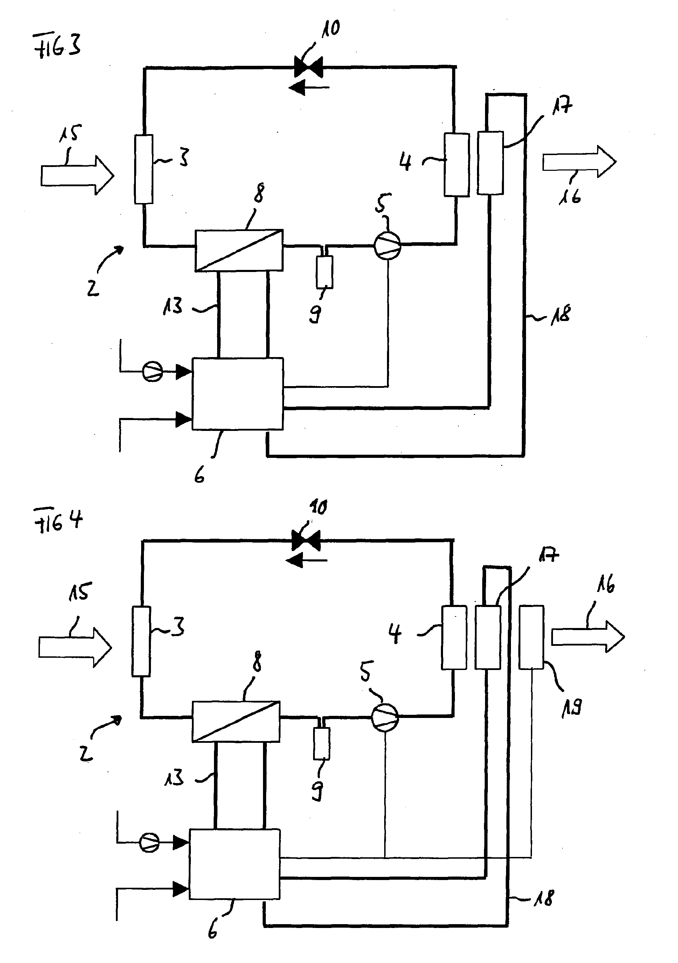

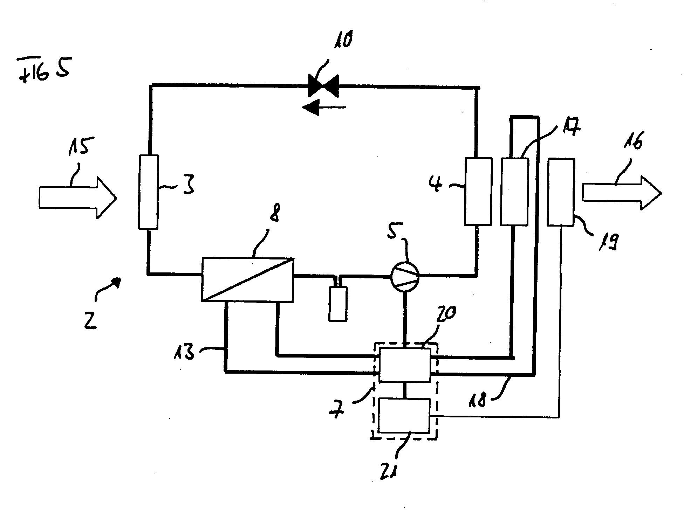

Bei dem Klimagerät von Figur 5 wird statt der Brennstoffzellenanordnung eine Motor-Generator-Einheit 7 eingesetzt. Diese umfaßt einen Verbrennungsmotor 20 und einen Generator 21. Der Verbrennungsmotor 20 ist so dimensioniert, daß er für den Betrieb des Klimageräts und eventuell zur Versorgung anderer elektrischer Verbraucher eingesetzt werden kann. Er ist somit abgestimmt auf den Standbetrieb eines Fahrzeug-Klimageräts.

Durch den Verbrennungsmotor 20 werden der Kompressor 5 sowie der Generator 21 angetrieben. Die durch den Verbrennungsmotor 20 erzeugte Abwärme wird wie bei der Brennstoffzellenanordnung einerseits auf den dritten Wärmeübertrager 8 und andererseits auf den zusätzlichen Wärmeübertrager 17 geführt. Die von dem Generator 21 erzeugte elektrische Leistung wird wiederum dem PTC 19 zugeführt. Alternativ zu dem mechanischen Antrieb des Kompressors 5 durch den Verbrennungsmotor 20 könnte dieser auch elektrisch angetrieben werden, wobei er von dem Generator 21 versorgt werden würde.

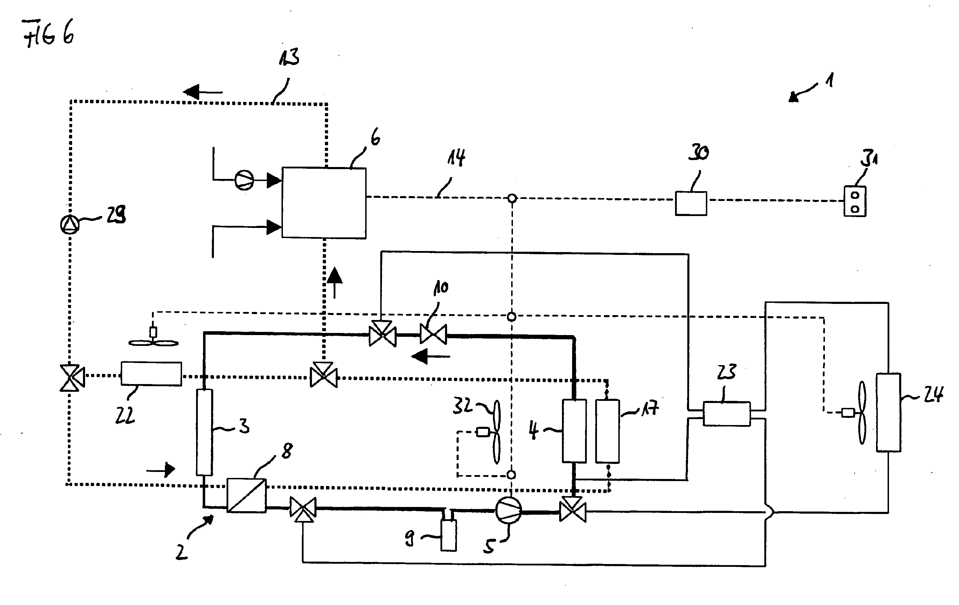

Die Figur 6 zeigt ein erfindungsgemäßes Klimagerät, das sowohl zum Heizen als auch zum Kühlen eingerichtet ist. Mehrere Komponenten des Klimageräts werden dabei in beiden Betriebsarten verwendet. In der Figur 6 ist die Betriebsart zum Heizen aktiv. Die in dieser Betriebsart benutzten Leitungsabschnitte sind zur Verbesserung der Übersichtlichkeit fett gezeichnet, während die unbenutzten Leitungsabschnitte dünn gezeichnet sind. In der gezeigten Betriebsart entspricht die Anordnung des Klimageräts im wesentlichen der Anordnung von Figur 3. Der Wärmepumpenkreislauf 2 umfaßt die gleichen Komponenten wie die Anordnung von Figur 3, lediglich sind mehrere Ventile vorgesehen, die für die Umschaltung zwischen den beiden Betriebsarten erforderlich sind. Der Kühlkreislauf der Brennstoffzellenanordnung 6 ist gestrichelt dargestellt. Die Abwärme der Brennstoffzellenanordnung 6 wird, wie bei Figur 3, über den dritten Wärmeübertrager 8 und den zusätzlichen Wärmeübertrager 17 geführt. Parallel zu den Leitungen über den dritten Wärmeübertrager 8 und den zusätzlichen Wärmeübertrager 17 kann der Kühlkreislauf über einen weiteren Wärmeübertrager 22 geschlossen werden. Dieser ist dafür vorgesehen, Wärme aus dem Kühlkreislauf der Brennstoffzellenanordnung 6 abzuführen, wenn nicht die gesamte zur Verfügung stehende Wärme zu Heizzwecken verwendet werden soll oder wenn sich das Klimagerät im Kühlbetrieb befindet. In diesem Fall wird die Wärme an die Umgebung abgegeben. Der Anteil der Kühlflüssigkeit, die über den Wärmeübertrager 22 einerseits bzw. die Wärmeübertrager 8 und 17 andererseits fließen soll, kann variabel eingestellt werden. Der Kühlkreislauf 13 wird durch eine Pumpe 29 aufrechterhalten.

Weiterhin ist das elektrische Netz des Klimageräts dargestellt. Die von der Brennstoffzellenanordnung 6 erzeugte elektrische Leistung wird, wie bei den vorangegangenen Ausführungsbeispielen, zum Antrieb des Kompressors 5 genutzt. Zudem werden mehrere Gebläse angetrieben, die jeweils einen Luftstrom durch die Wärmeübertrager erzeugen. Darüber hinaus wird die elektrische Leistung weiteren Verbrauchern des Fahrzeugs zur Verfügung gestellt. Mittels eines DC/AC-Wandlers 30 kann sogar eine Wechselspannung mit 110 V oder 230 V erzeugt werden, die an einer Steckdose 31 bereitgestellt wird und an die haushaltsübliche Verbraucher angeschlossen werden können.

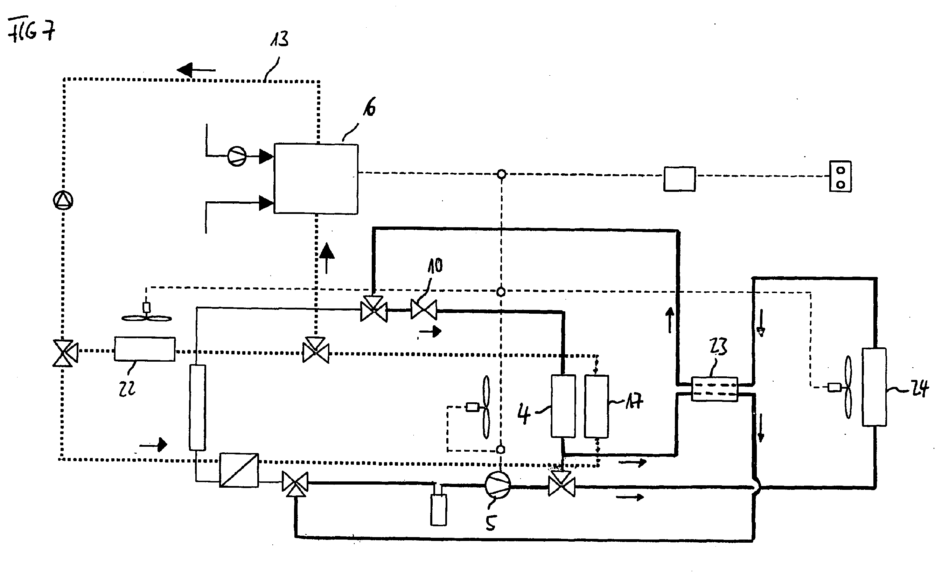

Die Figur 7 zeigt das Klimagerät von Figur 6 im Kühlbetrieb. Auch an dieser Betriebsart sind die verwendeten Leitungsabschnitte fett dargestellt, während die nicht benützten Leitungsabschnitte dünn gezeichnet sind. Der Wärmeübertrager 4 arbeitet als Verdampfer und nimmt Wärme aus dem Fahrzeuginnenraum auf. Diese Wärme wird auf einen internen Wärmeübertrager 23 geführt und der Kältekreis wieder zum Verdampfer 4 geschlossen. Das Expansionsventil 10 wird in dieser Betriebsart in Gegenrichtung betrieben im Vergleich zur Betriebsart von Figur 6. Der Wärmeübertrager 23 ist andererseits in einen zweiten Kältekreis aufgenommen, der einen Kondensator 24 sowie den auch im Heizbetrieb verwendeten Kompressor 5 beinhaltet. Aus Kostengesichtspunkten entscheidend ist, daß der Kompressor 5 sowohl im Heiz- als auch im Kühlbetrieb verwendet werden kann, da es sich um eine teure Komponente handelt, die einen wesentlichen Anteil an den Gesamtkosten des Klimageräts hat.

Die Brennstoffzellenanordnung 6 wird auch im Kühlbetrieb benötigt, um elektrische Energie zu erzeugen. Diese dient im dargestellen Ausführungsbeispiel auch zum Antrieb des Kompressors 5. Um die Abwärme der Brennstoffzellenanordnung 6 abzuführen, ist der Kühlkreislauf 13 in Betrieb und gibt Wärme über den Wärmeübertrager 22 an die Umgebung ab. Der über den Wärmeübertrager 17 führende Zweig des Kühlkreislaufs 13 ist nicht aktiv.

Der Wärmeübertrager 23 ist erforderlich, wenn der Kältekreis mit CO₂ als Kältemittel betrieben werden soll. Der Wärmeübertrager 23 ist erforderlich, um eine hohe Leistungsziffer (COP) zu erzielen. CO₂-Kältemittel, das aus dem Kondensator 24 austritt, wird auf dem Weg zum Expansionsventil 10 mittels des Wärmeübertragers 23 abgekühlt. Die Wärme wird von dem aus dem Verdampfer 4 austretenden Kältemittel aufgenommen, das eine um einige Grad niedrigere Temperatur besitzt als das aus dem Kondesator 24 austretende Kältemittel.

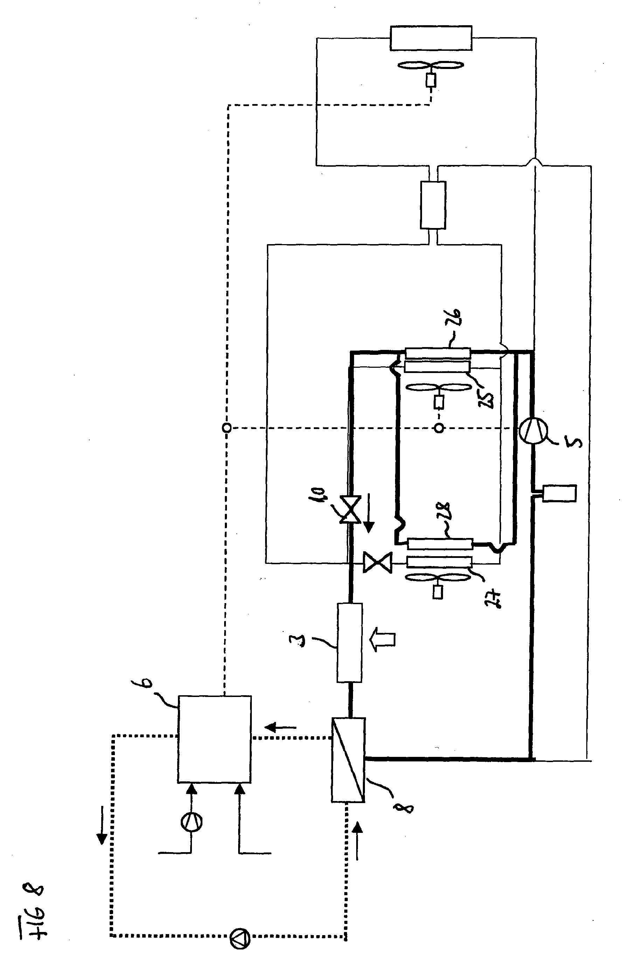

Die Figur 8 zeigt ein erfindungsgemäßes Klimagerät, das wie das Klimagerät von Figur 2 mit Wärmeübertragern 27 und 28 für den Frontbereich und 25 und 26 für den Heckbereich ausgestattet ist. Im Gegensatz zu den Ausführungsbeispielen von Figur 2 bzw. von Figur 6 und 7 sind für den Heiz- und Kühlbetrieb getrennte Wärmeübertrager vorgesehen. Die Wärmeübertrager 28 und 26 werden im Heizbetrieb eingesetzt, während die Wärmeübertrager 27 und 25 im Kühlbetrieb Verwendung finden. Der Vorteil einer solchen Aufteilung besteht darin, daß bei Wechsel vom Heiz- zum Kühlbetrieb verhältnismäßig viel Feuchtigkeit in dem Wärmeübertrager gespeichert ist, die unmittelbar nach dem Wechsel der Betriebsart die Scheiben in einem Fahrzeug beschlagen läßt. Dies ist durch die Trennung der Wärmeübertrager vermieden.

Die Verteilung der Heiz- bzw. Kühlleistung zwischen Frontbereich und Heckbereich kann selbstverständlich eingestellt werden, wobei die hierzu erforderlichen Ventile nicht dargestellt sind.

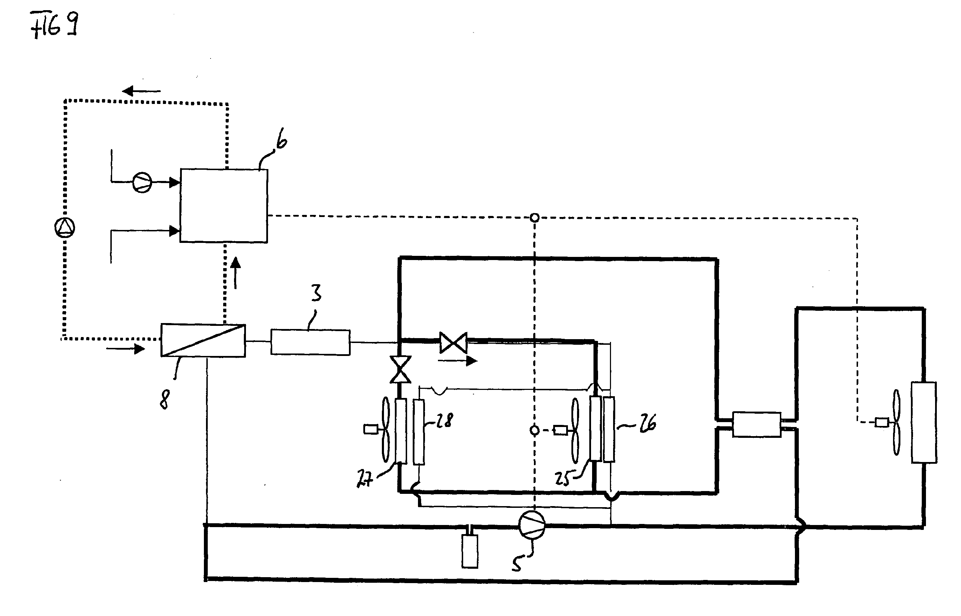

Die Figur 9 zeigt das Klimagerät von Figur 8 im Kühlbetrieb. Hieraus ist erkennbar, daß im Kühlbetrieb die Wärmeübertrager 27 und 25 aktiv in Betrieb sind.

Das Vorsehen getrennter Wärmeübertrager für den Heiz- und Kühlbetrieb hat zwar eine Kostensteigerung zur Folge, jedoch ist diese verhältnismäßig gering. Wesentlich im Hinblick auf die Kosten eines Klimageräts ist, daß der Kompressor 5 in beiden Betriebsarten verwendet werden kann.

Weitere Ausgestaltungen eines erfindungsgemäßen Klimageräts liegen im Ermessen des Fachmanns und sind daher von der Erfindung umfaßt.

### Bezugszeichenliste

- 1: Klimagerät
- 2: Wärmepumpenkreislauf
- 3: erster Wärmeübertrager
- 4: zweiter Wärmeübertrager
- 5: Kompressor
- 6: Brennstoffzellenanordnung
- 7: Motor-Generator-Einheit
- 8: dritter Wärmeübertrager
- 9: Sammler
- 10: Expansionsventil
- 11: Luftleitung
- 12: Kraftstoffleitung
- 13: Kühlkreislauf
- 14: elektrische Verbindung
- 15: Luftstrom aus der Umgebung
- 16: Luftstrom in den Fahrzeuginnenraum
- 16a: Luftstrom im Frontbereich
- 16b: Luftstrom im Heckbereich
- 4a: Wärmeübertrager für den Frontbereich
- 4b: Wärmeübertrager für den Heckbereich
- 17: zusätzlicher Wärmeübertrager
- 18: Kühlkreislauf zum zusätzlichen Wärmeübertrager 17
- 19: PTC (elektrisches Heizelement)
- 20: Verbrennungsmotor
- 21: Generator
- 22: weiterer Wärmeübertrager
- 23: interner Wärmeübertrager
- 24: Kondensator
- 25, 26, 27, 28: Wärmeübertrager
- 29: Pumpe
- 30: DC/AC-Wandler
- 31: Steckdose
- 32: Gebläse

## Patentansprüche

1. Klimagerät zur Standklimatisierung eines Fahrzeugs mit
- einem Wärmepumpenkreislauf (2) mit einem ersten Wärmeübertrager (3) zur Aufnahme von Umgebungswärme und einem zweiten Wärmeübertrager (4; 4a, 4b) zur Abgabe von Wärme in einen Fahrzeuginnenraum sowie einem elektrisch oder mechanisch antreibbaren Kompressor (5), der in Strömungsrichtung des Wärmepumpenkreislaufs (2) zwischen dem ersten und dem zweiten Wärmeübertrager (3, 4; 4a, 4b) angeordnet ist und
- einem Zusatzaggregat (6, 7) zur Erzeugung elektrischer oder mechanischer Leistung, wobei die elektrische oder mechanische Leistung zumindest teilweise zum Antrieb des Kompressors (5) eingesetzt wird, und
wobei ein dritter Wärmeübertrager (8) vorgesehen ist, durch den Abwärme des Zusatzaggregats (6, 7) auf den Wärmepumpenkreislauf (2) übertragen wird.

2. Klimagerät nach Anspruch 1,
**dadurch gekennzeichnet, daß**
der dritte Wärmeübertrager (8) in Strömungsrichtung des Wärmepumpenkreislaufs (2) zwischen dem ersten Wärmeübertrager (3) und dem Kompressor (5) angeordnet ist.

3. Klimagerät nach Anspruch 1,
**dadurch gekennzeichnet, daß**
der Wärmepumpenkreislauf (2) mit einem CO₂-Kältemittel gefüllt ist.

4. Klimagerät nach einem der Ansprüche 1 bis 3,
**dadurch gekennzeichnet, daß**
in einem Luftstrom (16) durch den zweiten Wärmeübertrager (4) ein zusätzlicher Wärmeübertrager (17) vorgesehen ist, dem zur weiteren Erwärmung des Luftstroms (16) Wärme von dem Zusatzaggregat (6, 7) zugeführt wird.

5. Klimagerät nach einem der Ansprüche 1 bis 4,
**dadurch gekennzeichnet, daß**
ein mit elektrischer Leistung versorgtes elektrisches Heizelement (19) in einem Luftstrom (16) durch den zweiten Wärmeübertrager (4) angeordnet ist.

6. Klimagerät nach einem der Ansprüche 1 bis 5,
**dadurch gekennzeichnet, daß**
in einer zweiten Betriebsart einzelne Komponenten (5, 9) des Wärmepumpenkreislaufs (2) zur Kühlung eines Fahrzeuginnenraums betrieben werden.

7. Klimagerät nach Anspruch 6,
**dadurch gekennzeichnet, daß**
der Kompressor (5) eine in der zweiten Betriebsart genutzte Komponente ist.

8. Klimagerät nach einem der Ansprüche 1 bis 7,
**dadurch gekennzeichnet, daß**
das Zusatzaggregat eine Brennstoffzellenanordnung (6) ist.

9. Klimagerät nach einem der Ansprüche 1 bis 7,
**dadurch gekennzeichnet, daß**
das Zusatzaggregat eine Verbrennungsmotor-Generator-Einheit (7) ist, durch die ein unabhängiger Betrieb des Klimageräts (1) von einem Fahrzeugantriebsmotor ermöglicht ist.
